# EUROPEAN PATENT SPECIFICATION

(11) **EP 3 018 467 B1**
(45) Date of publication and mention of the grant of the patent: **02.06.2021**
(21) Application number: 15193406.4
(22) Date of filing: 06.11.2015
(51) Int. Cl.: G01N 1/31, G01N 1/42

(54) **MICROSCOPIC SAMPLE PREPARATION**
MIKROSKOPISCHE PROBENVORBEREITUNG
PRÉPARATION D'ÉCHANTILLONS MICROSCOPIQUES

(30) Priority: 07.11.2014 GB 201419855
(43) Date of publication of application: 11.05.2016
(73) Proprietor: Linkam Scientific Instruments Ltd., Tadworth, Surrey KT20 5LR (GB)
(72) Inventor: KAMP, Arnoldus, Carshalton Beeches, Surrey SM5 4QQ (GB); NUGTEREN, Martijn, 1931 WZ Egmond aan zee (NL); VADER, Hildo, 1911LN Uitgeest (NL); KONING, Roman, 2318 ZN Leiden (NL); SCHWERTNER, Michael, Reigate, Surrey RH2 7DU (GB)
(74) Representative: Petty, Catrin Helen

(56) References cited:
- WO-A1-2013/056685
- US-A- 5 326 971
- US-A1- 2005 279 938
- US-A1- 2006 033 038
- US-A1- 2009 314 955
- VAN DRIEL L F ET AL: "Tools for correlative cryo-fluorescence microscopy and cryo-electron tomography applied to whole mitochondria in human endothelial cells", EUROPEAN JOURNAL OF CELL BIOLOGY, WISSENSCHAFLICHE VERLAGSGESELLSCHAFT, STUTTGART, DE, vol. 88, no. 11, 2 September 2009 (2009-09-02), pages 669-684, XP026585829, ISSN: 0171-9335, DOI: 10.1016/J.EJCB.2009.07.002 [retrieved on 2009-09-02]

## Description

The present invention relates to microscopic samples, and particularly to microscopic sample preparation for analytical purposes. The invention in particular relates to novel methods for preparing microscopic samples, and to apparatus for carrying out the methods. The invention is especially concerned with methods and apparatus for preparing microscopic cryosamples using plunge freezing, and sample handling for electron microscopy and fluorescence microscopy under cryo-conditions.

Electron microscopy (EM), cryo-electron microscopy (CEM), cryo-fluorescence microscopy (CFM) and cryo x-ray tomography (CXT) techniques are known. Furthermore, in the emerging method of Correlative Light and Electron Microscopy (CLEM), some of these microscopy techniques are combined to gain both biological and structural information from a sample by combining complementing imaging modalities.

Because cells and other biological objects (e.g. proteins) are incompatible with the harsh conditions in the vacuum chamber of the electron microscope, a common approach is to embed the samples in a sheet of vitrified water. Provided that the freezing is fast enough, the water can be turned into a glass-like form, in a process known as vitrification. In a vitrified sample, no crystals are formed, which would otherwise compromise imaging quality and the sample's ultra-structure. When the sample is embedded in a thin sheet of vitrified water, it can be transferred into the electron microscopy chamber and is compatible with the vacuum conditions found in an Electron Microscope (EM). The vitrified sheet with the embedded sample can then be studied with very high resolution, typically at the Angstrom level for a good EM system.

In cryo-EM, the vitrified layer with the embedded sample has to be very thin, typically 100 nm and below so that the electron beam can penetrate the thin sheet. The vitrified layer has to be kept at a temperature below approximately -140°C in order to avoid the formation of ice crystals that would otherwise destroy the sample. Moisture in the air surrounding the sample can condense on the surface and form ice crystals that contaminate the sample.

One way to obtain a vitrified sample is the established procedure of plunge-freezing in which the sample is rapidly immersed ("plunged") in a cryogen, typically liquid ethane or liquid propane or a mixture of the two. Because the freezing happens very quickly, ice crystals do not form and the resulting water has a glass-like "vitrified" property Therefore, it lends itself well to high-resolution EM. The advantage of vitrified biological material is that one can investigate the sample in its fully hydrated, near natural state. In order to obtain high-quality vitrified samples by means of plunge freezing suitable for high-resolution EM, the key issues are the thickness of the layer of liquid before the plunging step, as well as any ice contamination introduced during sample handling and sample transfer steps between the instruments, e.g. the plunge freezer and the imaging or sectioning instruments.

Thin cells, suspensions containing viruses or vesicles or solutions containing proteins to be studied are often prepared on electron microscopy (EM) grids. In most cases, these grids are also covered by a very thin (holey) carbon membrane, providing additional support for the sample. Before a sample held on a support can be plunge-frozen, the excess liquid (which is mainly water, sometimes with additional cryoprotective agents) must be removed in order to create a very thin layer of vitrified water. For plunge freezing, several commercial instruments are available, among them the Leica EM GP Grid plunger, the FEI Vitrobot and the Gatan Cryoplunge3. Each of these currently available commercial grid plunging instruments uses a blotting process in order to remove excess liquid from the sample, using a blotting paper. The blotting is typically performed in a chamber with controlled humidity. For this process, the parameters of blotting time, blotting force as well as humidity are usually controlled. The blotting step is crucial for the overall process. However, a problem with blotting is that it is not very repeatable and may be inconsistent for a variety of reasons.

Firstly, the movement and force of the blotting step need to be calibrated, which involves calibrating and measuring the exact position of the sample and the mount(s) of the blotting paper. Blotting can be achieved using a one-sided or two-sided process, and the flexibility of the fragile sample itself can introduce further errors to the blotting force in case of one-sided blotting. Secondly, the blotting paper soaks in the humidified chamber, changing the blotting efficiency as it gets wet. The paper can be used for a certain time only, before it needs replacing. This is another parameter the user has to carefully monitor and control. Thirdly, the blotting paper itself is a natural material with deviations in quality. Therefore, blotting parameters found with an instrument can only be used for the same quality of paper. Fourthly, another aspect to consider apart from the physical parameters of the instrument is the skill of the user conducting the blotting step. Because sample loading, exchange of blotting paper and blotting force calibration involve some form of manual skill, they also influence the outcome and repeatability of the blotting process, and this limits and restricts the wide adoption of the technique.

Relevant prior art can be found in documents US2006033038, US2005279938 and US5326971.

There is therefore a need to provide improved apparatus and methods for preparing microscopic samples, which replace the blotting process for removing excess water or fluid from the sample before it is plunged into the cryogen.

According to a first aspect of the invention, there is provided an apparatus according to claim 1.

The apparatus of the first aspect uses a suction force to draw excess fluid from the sample, and subsequently create a stream of gas in the vicinity of the sample in order to remove any remaining fluid on the sample by means of evaporation into the stream of gas. This process enables the tight control of the amount of excess fluid remaining in or on the sample. Hence, the apparatus of the invention efficiently removes fluid (including liquid) from the sample, and makes it possible to obtain plunge-frozen vitrified samples with a consistent, repeatable quality and thickness and with minimised sample contamination. Furthermore, in contrast to the known method of blotting a sample for removing excess water before it is plunged into a cryogen, the apparatus of the invention allows access to a variety of optical analytical methods for determining the thickness of the remaining fluid on the sample.

Following fluid removal in the apparatus of the invention, and subsequent plunge freezing, the sample may then be examined using Cryo-Fluorescence Microscopy, Cryo-Electron-Microscopy, Cryo-X-ray microscopy/tomography, or treated using Focussed Ion Beam (FIB). The FIB instrument is a sample milling and processing tool rather than an imaging technique, and can be used to modify the sample prior to imaging.

Often FIB is also integrated within an electron microscopy system. As such, the apparatus is preferably configured to prepare a microscopic vitrified cryosample using plunge freezing, and sample handling for subsequent electron microscopy, electron tomography, FIB processing, X-ray microscopy/tomography and fluorescence microscopy under cryo-conditions.

Preferably, the sample is a biological sample, which is preferably hydrated. The biological sample may comprise a cell, vesicle or virus, which may be suspended in a fluid, for example water. The biological sample may also contain a protein solution. Accordingly, it is preferred that the fluid that is removed by the apparatus of the invention comprises a liquid, such as water. Additional particles may be added to the sample to act as fiducial markers for the purpose of sample navigation, such as gold particles or fluorescent polystyrene beads.

The sample may also be a non-biological sample, for example, one which can be investiged in materials science, such as various kinds of polymer beads, soapy solutions, block-copolymer suspensions, inorganic salt crystals or artificial membranes.

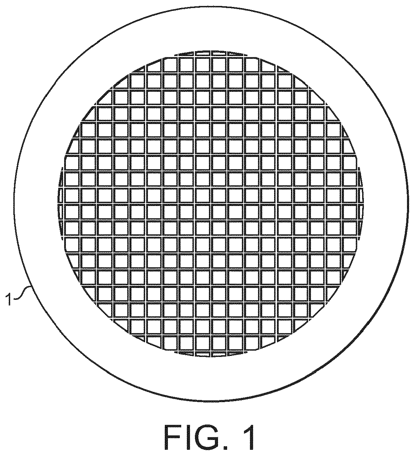

The sample support may be a microscopy grid, and preferably an electron microscopy grid. The support illustrated in Figure 1 is circular, but it will be appreciated that other shapes and types are available, for example hexagonal or rectangular grids, as well as slotted versions, or finder grids with embedded landmark patterns. The sample support may comprise a membrane onto which the sample can be placed. The membrane may comprise a perforated carbon film. Alternatively, the membrane may comprise a silicon-based support, such as silicon nitride or silicon carbide, or a plastic support layer, such as Formvar or parlodion or others.

Preferably, the apparatus comprises sample handling means configured to hold and move the sample support between different sections of the apparatus. The sample handling means preferably comprises gripping means configured to grip and/or release the sample support in different sections of the apparatus. Preferably, the sample handling means comprises a track along which the gripping means is moveable, preferably along a substantially horizontal axis. Preferably, the gripping means is configured to be raised and/or lowered, more preferably along a substantially vertical axis. Preferably, the gripping means comprises tweezers, or the like, which are preferably fully actuatable. It will be appreciated therefore that the sample support (which supports the sample when in use) can be picked up by the gripping means, and then moved between the different sections of the apparatus, where the sample support is released and/or processed.

Preferably, the sample handling means comprises sample delivery means configured to deliver the sample to the sample support. Preferably, the delivery means is configured to be raised and/or lowered, more preferably along a substantially vertical axis. Preferably, the delivery means and the gripping means are configured to be raised and/or lowered independently of one another. Preferably, the delivery means comprises a pipetting unit, or the like, which is preferably fully actuatable. Preferably, the pipetting unit comprises a syringe having a plunger which is used to deliver, to the sample support, the sample.

In one preferred embodiment, the sample support may be treated to make it substantially hydrophilic or hydrophobic. Typically, sample supports are substantially hydrophobic. For most applications, a hydrophilic surface is required, in which case the sample support is treated such that the sample support is made hydrophilic and therefore the sample spreads evenly on the sample support and stays in position on the sample support. Conversely, some particular samples can require a hydrophilic surface of the sample support.

Hence, the apparatus may comprise means for making the sample support substantially hydrophilic or hydrophobic. Preferably, therefore, the apparatus comprises a chamber configured to render a section of the sample support substantially hydrophilic. The chamber may comprise a glow discharge chamber configured to apply a vacuum and carry out plasma treatment on the sample support. The polarity of electrodes in the chamber between which the sample support is placed for the treatment can be switched. The arrangement is such that the polarity can also be switched during glow discharge treatment. Changing the polarity of the glow discharge electrodes can have an influence on how the particles contained in the sample adhere and attach to the sample support.

Preferably, the humidity chamber is disposed adjacent to, and downstream of, the glow discharge chamber. According to the invention, the humidity chamber comprises a humidity sensor configured to detect and monitor the humidity of the environment surrounding the sample disposed on the sample support. Preferably, the humidity chamber comprises a temperature sensor configured to monitor the temperature of the microscopic sample disposed on the sample support. Preferably, the humidity chamber comprises one or more heating elements configured to control the temperature of the chamber. Optionally, the humidity chamber comprises means for detecting the composition of the gas atmosphere within the chamber. The humidity chamber preferably comprises one or more access port via which the chamber may be accessed, and one or more closable lid for sealing the or each access port.

Preferably, the apparatus comprises a fluid channel in fluid connection between the sample clamp and the suction means, and along which fluid removed from the sample can flow. Preferably, the fluid channel comprises a filter disposed therein, which filter is configured to remove hazardous or infectious biological material from the fluid that is removed from the sample. Typically, this filter is disposable and can be replaced.

The suction means is preferably configured to create a negative pressure differential at or around the sample. In one embodiment, the suction means may comprise means for creating a vacuum at least adjacent to the sample. However, in a preferred embodiment, the suction means comprises a suction pump configured to create a suction force at least adjacent to the sample.

When the process of removing excess liquid from the sample is started, the suction means is configured to create a fluid stream, which is drawn away from the sample support and sample thereon and along the fluid channel. Initially, the fluid stream comprises excess liquid disposed on or in the sample. However, subsequently, after the majority of excess liquid has been removed from the sample, the stream then preferably consists predominantly of vapour or gas, which creates an area of low pressure around the sample, which removes any remaining excess liquid therefrom along the fluid channel. This removal of liquid is based on evaporation from the sample into the vapour stream.

Preferably, the suction means may be controlled to continue to produce a stream on or in the vicinity of the sample, in which the stream will mainly be composed of the gas atmosphere from the humidity chamber. Advantageously, the interaction of the gas stream with the remaining liquid allows the operator to tightly control the liquid film thickness on the sample by adjusting the suction flow rate and/or duration of suction and/or the temperature and/or humidity inside the humidity chamber.

The sample clamp may be rotatable about an axis of rotation, such that the sample support is moved between a first orientation in which sample is applied thereto, and a second orientation in which the sample is plunged into a cryogen bath. Preferably, when the sample support is in the second orientation, the fluid is removed from the sample, prior to plunging in the cryogen bath. The first orientation is preferably substantially horizontal, and the second orientation is preferably substantially vertical.

Preferably, the sample clamp comprises an aperture extending therethrough, and via which sample is applied to the sample support by the sample delivery means. Advantageously, the aperture also allows an operator to observe the clamped sample support and sample being applied thereto and/or fluid being removed from the sample.

In one embodiment, the sample clamp may further comprise a treatment holder configured to accommodate the sample support during fluid removal. Preferably, the treatment holder comprises an aperture extending therethrough, and via which sample is applied to the sample support by the sample delivery means. The treatment holder may comprise two halves which sandwich the sample support therebetween. Preferably, the two halves comprise magnets which mutually attract each other resulting in the sample support being sandwiched therebetween. The treatment holder may comprise one or more clamp which is configured to retain the two halves together.

Preferably, the treatment holder comprises at least one, and more preferably a plurality of spaced apart, radially extending grooves or channels along which fluid removed from the sample can flow. It is preferred that the or each groove or channel extends inwardly from the circumference of the holder towards its centre. The or each groove may extend into the centre of the holder. However, preferably the or each groove extends only partially away from the holder's circumference, and towards the holders centrepoint.

Preferably, the at least one radially extending groove or channel is disposed on a surface of the treatment holder which contacts the sample support. Most preferably, therefore, each half of the treatment holder configured to contact the sample support comprises at least one, and more preferably a plurality of spaced apart, radially extending grooves or channels.

Preferably, the treatment holder comprises an outer groove or channel extending around the circumference of the holder, preferably each half thereof. Preferably, the outer circumferential groove or channel is in fluid communication with the at least one radially extending groove or channel. Preferably, the outer circumferential groove or channel is in fluid communication with the fluid channel connected to the suction means.

Accordingly, preferably the fluid feeds away from the sample disposed on the sample support through the aperture in the treatment holder, along the radial groove where it meets the circular groove, and then along fluid channel to pump. It will be appreciated that arrangement of grooves and channels enables a uniform spatial distribution of the stream in the vicinity of the sample for removal of the excess fluid.

Preferably, the apparatus comprises processing means configured to control the suction means, and to monitor and control the temperature and humidity inside the humidity chamber.

Preferably, the apparatus comprises optical means configured to monitor fluid removal from the sample. Depending on the progress of the fluid removal, the subsequent step of plunge freezing can then be triggered. The optical means preferably comprises a microscope assembly, which is installed or can be brought into position to focus on the sample. Preferably, the microscope assembly comprises an objective lens and an eyepiece module for direct viewing of the sample and/or a camera module for remote observation of the sample. The objective lens preferably has its optical axis aligned substantially parallel to the sample axis, and may be focused on the sample support. The observation can be by the eye of the operator of the instrument and/or by use of a camera. The microscope assembly preferably comprises illumination means and/or optical filters. The optical microscope may comprise one or more of the typical optical imaging modes, including reflected light illumination, oblique reflected light, darkfield illumination and fluorescence.

Preferably, the apparatus comprises a film thickness measurement system configured to measure the film thickness of the liquid film on the sample support. The film thickness measurement system may be a thin film metrology system based on spectroscopic reflectometry. The thin film metrology system is preferably fibre-coupled. In this configuration the optical microscope can also be used to verify the location of the measurement spot of the thin film metrology system on the sample support.

Preferably, the film thickness measurement system is disposed on the opposite side of the sample support to the optical means configured to monitor fluid removal from the sample, preferably substantially on an optical axis parallel to the microscope.

Preferably, the apparatus comprises a cryogen bath containing a primary cryogen by which the treated sample is cryo-frozen, preferably when the sample support is in the second orientation. The primary cryogen may be liquid ethane or propane, or a mixture thereof. The cryogen bath preferably comprises temperature control means that prevents the liquid cryogen solidifying. Such temperature control means typically comprises a temperature sensor and a heating element. Preferably, the cryogen bath is disposed adjacent to, and downstream of, the humidity chamber. The sample handling means, and preferably the gripping means thereof, is arranged to transfer the sample support from the humidity chamber to the cryogen in the cryogen bath. Preferably, the sample handling means moves the sample support into a position above the cryogen bath from where it is lowered (i.e. "plunged") into the cryogen. The sample handling means may comprise biasing means configured to urge the sample support into the cryogen. Alternatively, the plunging motion may be a free-fall motion relying solely on gravity. The sample handling means is configured to extract the sample support from the cryogen after the plunging process.

Preferably, the apparatus comprises a loading chamber in which the cryo-frozen sample is loaded into a sample cassette holder, and by which an operator may view or analyse the sample. Preferably, the loading chamber is disposed adjacent to, and downstream of, the cryogen bath. Preferably, the loading chamber comprises a transfer container partially or fully immersed in a secondary cryogen, for example liquid nitrogen. Preferably, the cassette holder is configured to receive one or more sample support. The cassette holder preferably comprises metal in order to have sufficient heat capacity and to transfer cooling applied to its outside from the secondary cryogen. The cassette holder preferably comprises two halves which sandwich the or each sample support therebetween. Preferably, the two halves comprise magnets which mutually attract each other resulting in the or each sample support being sandwiched therebetween. The cassette holder may comprise one or more clamp which is configured to retain the two halves together. Preferably, the cassette holder comprises one or more aperture extending therethrough, which allow access to the sample for the purpose of screening and imaging.

The sample handling means, and preferably the gripping means thereof, is arranged to keep holding the sample support inside the cryogen bath during the plunging process. The sample handling means, and preferably the gripping means thereof, is arranged to place the sample support into the pre-cooled cassette holder after the plunging, where the cassette holder in turn is placed in the pre-cooled transfer container.

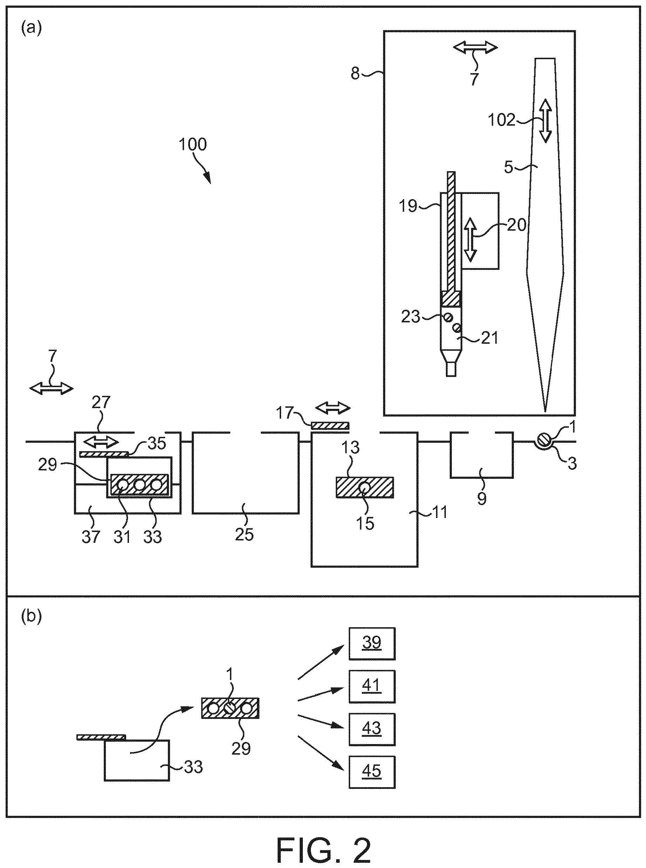

The transfer container may comprise a movable lid which is configured to be opened and closed as needed and gives additional protection to the samples from contamination. The closed transfer container may then be manually removed from the loading section and can be stored and transported in the secondary cryogen (i.e. the liquid nitrogen) to another instrument as illustrated in Figure 2(b). At its destination, the cassette holder can be removed from the transfer container and transferred into other instruments/techniques, including but not limited to a Cryo-Fluorescence Microscope, a Cryo-Electron-Microscope, a Cryo-X-ray microscope/tomography, or a Focussed Ion Beam.

The inventors have developed a novel method for removing fluid from a microscopic sample using the apparatus of the first aspect.

According to a second aspect of the invention, there is provided a method for removing fluid from a microscopic sample, according to claim 12.

The method comprises use of the apparatus of the first aspect.

Preferably, the sample is a biological sample, for example a cell, vesicle or virus, which may be suspended in a fluid, for example water, or a protein solution. The sample may also be a non-biological sample.

Preferably, the method comprises gripping and/or releasing the sample support with gripping means. Preferably, the method comprises raising and/or lowering the gripping means, more preferably along a substantially vertical axis. The method preferably comprises picking up the sample support by the gripping means, and then moving it between the different sections of the apparatus, where the sample support is released and/or processed.

Preferably, the method comprises deliver the sample to the sample support with sample delivery means. Preferably, the method comprises raising and/or lowering the delivery means, more preferably along a substantially vertical axis.

In one preferred embodiment, the method may comprise treating the sample support to make it substantially hydrophilic or hydrophobic. Preferably, the sample support is treated such that it is made hydrophilic. The method may comprise applying a vacuum and carrying out plasma treatment on the sample support. The method may comprise switching the polarity of electrodes either side of a chamber in which the sample support is placed. The method may comprise switching the polarity during the treatment.

The method comprises detecting and monitoring the humidity of the environment surrounding the sample disposed on the sample support. Preferably, the method comprises monitoring the temperature of the microscopic sample disposed on the sample support. The method may comprise detecting the composition of the gas atmosphere within the chamber.

Preferably, the method comprises creating a negative pressure differential at or around the sample. The method may comprise creating a vacuum at least adjacent to the sample. However, in a preferred embodiment, the method comprises the use of a suction pump for create a suction force at least adjacent to the sample. Preferably, the method comprises producing a fluid stream on or in the vicinity of the sample, in which the stream is initially composed of liquid from the sample, and then subsequently the stream is composed of the gas atmosphere from the humidity chamber.

The method may comprise inserting the sample support in a treatment holder for the fluid removal step. Preferably, the apparatus comprises controlling the suction, and to monitoring and controlling the temperature and humidity inside the humidity chamber.

The method may comprise monitoring the sample support during the process of fluid removal by means of optical microscopy focused on the sample support.

The method may comprise monitoring the liquid film thickness on the sample support during the process of fluid removal by means of a film thickness measurement system.

Preferably, the method comprises cryo-freezing the sample in a cryogen bath containing a primary cryogen, which may be liquid ethane or propane, or a mixture thereof. Preferably, the method comprises collecting the sample support from inside the humidity chamber, and transferring it into the cryogen in the cryogen bath. Preferably, the method comprises moving the sample support into a position above the cryogen bath from where it is lowered (i.e. "plunged") into the cryogen. The method may comprise extracting the sample support from the cryogen after the plunging process.

Preferably, the method comprises moving the cryo-frozen sample into a loading chamber in which it is loaded into a sample cassette holder, and by which an operator may view or analyse the sample. Preferably, the method comprises placing the sample support into the pre-cooled cassette holder after the plunging, where the cassette holder in turn is placed in the pre-cooled transfer container.

The method may comprise transferring the cassette holder to a processing or imaging device, including a Cryo-Fluorescence Microscope, a Cryo-Electron-Microscope, a Cryo-X-ray microscope/tomography, or a Focussed Ion Beam.

For a better understanding of the invention, and to show how embodiments of the same may be carried into effect, reference will now be made, by way of example, to the accompanying Figures, in which:-
**Figure 1** is a plan view of an electron microscopy grid used as one embodiment of a sample support with the apparatus of the invention;
**Figure 2a** is a schematic side view of an embodiment of the apparatus of the invention showing a sample handling unit, which shuttles between a pickup location, a glow discharge chamber, a humidity chamber, a plunger bath unit and a loading chamber/area;
**Figure 2b** illustrates the arrangement between a transfer container in the loading chamber of the apparatus shown in Figure 2a, and associated analytical apparatus for studying the cryo-plunged sample, such as cryo-fluorescence microscopy, cryo-electron microscopy, cryo X-ray microscopy/tomography or a focused ion beam treatment (FIB);
**Figure 3a** is a schematic cross-sectional view through the humidity chamber of the apparatus shown in Figure 2 with its sample treatment holder in a horizontal configuration;
**Figure 3b** is a schematic cross-sectional view through the humidity chamber of the apparatus shown in Figure 2 with the sample treatment holder in a vertical configuration;
**Figure 3c** is a schematic cross-sectional view through the humidity chamber of the apparatus shown in figure 2, with the sample treatment holder in a vertical configuration and an optical microscope and thin film thickness measurement sensor configured to image or analyse the sample during the process of fluid removal; and **Figure 4** is an enlarged plan view of the treatment holder used in the apparatus.

### Example

The inventors have developed a novel apparatus (100) and method which replaces the conventional paper-based blotting technique that is used to remove excess liquid from a sample before it is plunge frozen. In the apparatus (100), which is described in detail below, the principle of suction is used to draw excess liquid from the sample, and subsequently create a stream of gas in the vicinity of the sample in order to remove most of the remaining liquid on the sample in a controlled manner by means of evaporation into a stream of gas. In this way, the amount of excess liquid remaining in or on the sample is tightly controlled. In order to control the process and make it repeatable, the parameters of suction volume, sample temperature and humidity, and suction flow rate are all regulated. The method for the removal of excess fluid can be used in the process of sample preparation prior to the step of cryo-plunging as used in electron microscopy, but is not limited to this application.

Referring first to Figure 1, there is shown a circular electron microscopy grid as one example of a sample support (1). The diameter of the support (1) is typically about 3.05 mm, and the thickness is typically about 10 to 25 micrometres. When a silicon-based support (1) is used, this would typically be in the range from 50 to 200 microns. Many different sample support shapes/types are available, however, for example hexagonal or rectangular grids, as well as slotted versions. Applications of such supports (1) include cryo-fluorescence microscopy, cryo-electron microscopy, cryo X-ray microscopy/tomography and focused ion beam treatment (FIB).

Referring now to Figure 2(a), there is shown one embodiment of the apparatus (100) of the invention. The apparatus (100) consists of a sample manipulation unit (8), which moves the sample support (1) along horizontal axis (7) between a series of treatment or manipulation chambers, i.e. a glow discharge chamber (9), a humidity chamber (11), a plunger-bath unit (25), and a loading chamber (27), each of which are described in detail below. Axis (7) is horizontal and parallel to the plane of the Figure 2(a). The sample manipulation unit (8) includes fully actuatable tweezers (5) which can be raised or lowered along vertical axis (102), and by which the sample support (1) can be picked up and moved between the different sections/chambers of the apparatus (100). In addition to the tweezers (5), the sample manipulation unit (8) includes a fully actuatable pipetting unit (19), which can itself be raised or lowered along vertical axis (20) independently of the tweezers (5). The pipetting unit (19) includes a precision syringe having a plunger which is used to deliver, to the sample support (1), liquid (21) (e.g. water) and sample particles (23), which can be cells, vesicles, viruses or proteins etc. It is these particles (23) which will ultimately be cryo frozen and then viewed, for example, via electron microscopy or an X-ray technique. The relative size of the sample particles (23) is exaggerated in Figure 2(a) for clarity.

In use, the empty sample support (1) is initially placed manually in a pickup location (3) by an operator. The operator then activates the apparatus (100) such that the sample support (1) is then automatically picked up with the tweezers (5), which are automatically actuated. The manipulation unit (8) is then automatically moved between from one treatment chamber to the next, each of which is aligned along horizontal axis (7). The tweezers (5) and the pipetting unit (19) are combined into the manipulation unit (8) and move together along the axis (7). Both the tweezers (5) and the pipetting unit (19) can be raised and lowered independently of each other in order to reach and manipulate the sample support (1), as described below.

Following pickup of the sample support (1), it is then placed in a glow discharge chamber (9) by releasing the tweezers (5). Inside the glow discharge chamber (9), a vacuum is applied and a plasma treatment step is carried out, such that the surface of the sample support (1) is modified and rendered hydrophilic or hydrophobic, as necessary, in order to prepare it for receiving the sample particles (23) contained in the liquid (21), which will be placed thereon. For example, samples containing cells, viruses or proteins require the support (1) to be hydrophilic, whereas samples containing artificial polymeric beads, liposomes or specific proteins require a hydrophobic support (1). A typical configuration for the plasma treatment is 2 x 10(-1) millibar, 20-60 seconds.

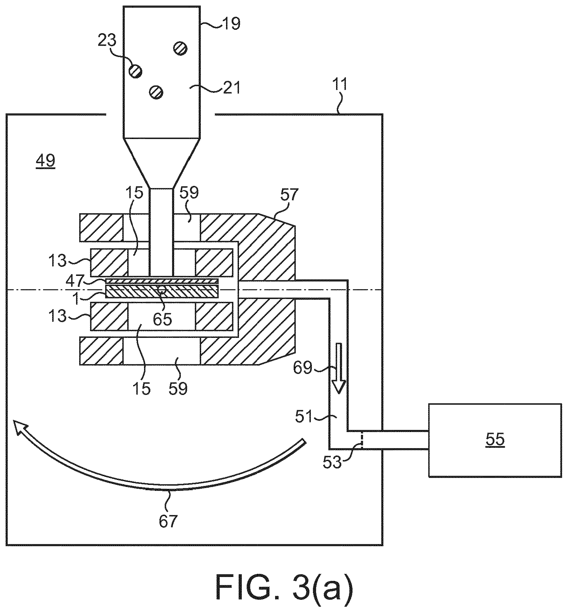

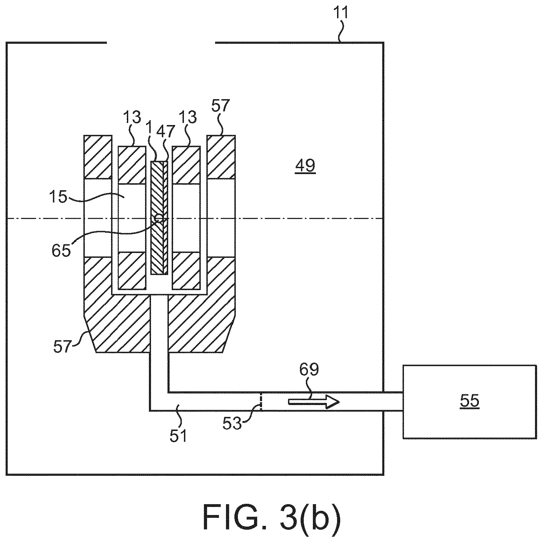

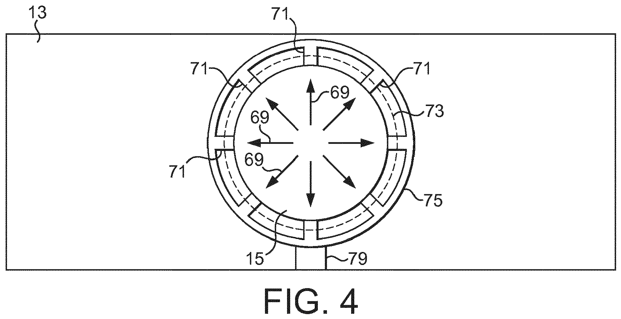

Following treatment in the glow-discharge chamber (9), the sample support (1), which is now ready to receive the sample (23) is then picked up by the tweezers (5), and transferred to a humidity chamber (11) which is disposed adjacent to the glow discharge chamber (9). The tweezers (5) carefully place the sample support (1) in a treatment holder (13), an enlarged view of which is illustrated in Figure 4. The holder (13) is itself is located inside a rotatable suction mount (57) within the humidity chamber (11), as shown in detail in Figure 3a and 3b.

Referring next to Figure 2a, the humidity chamber (11) is shown having a slideable lid (17) which is removed when required for access, and which protects and contains the micro-climate inside the humidity chamber (11). The temperature and humidity inside the chamber (11) are monitored and controlled by using humidity and temperature sensors (not shown) as well as heating elements (not shown). Because the pipetting unit (19) and tweezers (5) are contained within the manipulation unit (8), when the sample support (1) has been inserted in the humidity chamber (11) by the tweezers (5), the pipetting unit (19) will have been similarly moved along axis (7) so that it is also positioned directly above the humidity chamber (11). The pipetting unit (19) is then slowly lowered into the humidity chamber (11) in order to allow access to the sample support (1) disposed therein.

Referring to Figures 3a and 3b, the treatment holder (13) is held within the suction mount (57), which is rotatable (67) about an axis of rotation (65), such that the treatment holder (13) can be rotated between vertical and horizontal orientations. Figure 3a shows the suction mount (57) and treatment holder (13) in a horizontal orientation, i.e. for loading and sample pipetting. The holder (13) includes an aperture (15) extending therethrough, and through which the sample support (1) can be accessed via the lowered pipetting unit (19). The aperture (15) also allows the sample support (1) to be observed by the operator. The treatment holder (13) is also equipped with a gripping clamp (not shown) which securely holds and clamps the sample support (1) during the manipulation, and which is released for later gripping by the tweezers (5) when it needs to be removed from the humidity chamber (11).

In the embodiment shown in Figure 3a, the sample support (1) includes an optional membrane (47) attached thereto, and onto which a sample can be placed. The membrane (47) can be a perforated carbon film, such as described in Quantifoil website, follow link Electron Microscopy at: http://www.quantifoil.com/, as retrieved on August 28, 2014.

With the suction mount (57) and treatment holder (13) in a horizontal orientation, the pipetting unit (19) then performs a two-step process of feeding sample material (23) to the sample support (1) by:- (i) ejecting a volume of liquid (21) onto the sample support (1), and (ii) removing most of the liquid (21) by sucking it back into the pipetting unit (19). The pipetting unit (19) is lowered from the top into the humidity chamber (11) and feeds liquid (21) with sample particles (23) onto the sample support (1), as required. During this process, the height of the pipetting unit (19) can be adjusted along a vertical axis by means of the pipetting height calibration (20) in order to vary the distance between pipetting unit (19) and sample support (1). The height calibration (20) typically uses a micrometer drive to obtain accurate positioning.

The result of this step is that the liquid (21) is now wetting the sample support (1) and/or optional membrane (47) and contains the sample particles (23), which could be cells, viruses, vesicles or proteins. The sample support (1) is accommodated in the treatment holder (13) located within the humidity chamber (11). In the cross-section view of Figure 3(a), the treatment holder (13) is shown as consisting of an upper half and a lower half. The two halves attract each other by means of embedded magnets (not shown) and clamp the sample support (1) therebetween. The treatment holder (13) is itself mounted inside the suction mount (57), which has a U-shaped cross-section. The pipetting unit (19) has direct access to the sample support (1) through an aperture (59) which extends through the suction mount, as well as via the inner aperture (15) extending through the treatment holder (13).

In the horizontal configuration of the sample support (1) shown in Figure 3a, a sequence of liquids can be added to the sample support (1), for example dyes or chemical agents, which may be loaded into the pipetting unit (19) instead of the liquid (21) and can be used to process previously loaded sample particles (23). Inside the humidity chamber (11), temperature, humidity and optionally also the composition of the gas atmosphere (49) in the humidity chamber (11) are controlled. Usually the gas atmosphere (49) inside the humidity chamber (11) will be mainly composed of humid air. The humidity chamber (11) typically includes access ports and inlets/outlets, which are not shown for clarity.

When the pipetting step is finished, the pipetting unit (19) is retracted out of the humidity chamber (11). The sample support (1), treatment holder (13) and the suction mount (57) are then all rotated together (67) about axis of rotation (65), such that these components (1), (13) and (57) are now in a substantially vertical orientation, as shown in Figure 3b, in which the step of removing excess liquid from the sample support (1) is carried out using suction, as described below. Similarly, the step of removing excess liquid from the sample support (1) can be carried out in the horizontal orientation prior to the rotation.

As shown in Figure 3b, a suction channel (51) is connected to the base of the suction mount (57), along which excess liquid from the sample support (1) will flow. Suction force is created by a suction pump (55) disposed at the end of suction channel (51). A filter element (53) is disposed in the suction channel (51) and is required in case hazardous or infectious biological material is being manipulated. When the process of removing excess liquid from the sample is started, the suction pump (55) creates a liquid stream (69), which is drawn away from the sample support (1), i.e. the sample. Initially, this stream (69) consists of any excess liquid disposed on or in the sample support (1). However, subsequently, after the majority of excess liquid has been removed from the sample support (1), the stream (69) then consists predominantly of vapour or gas, which creates an area of low pressure around the sample support (1), which removes any remaining excess liquid therefrom. This removal of liquid is based on evaporation from the sample support (1) into the vapour stream (69). The suction pump (55) can be controlled to continue to produce a stream (69) on or in the vicinity of the sample support (1) as indicated by the arrow, where the stream (69) will mainly be composed of the gas atmosphere (49) from the humidity chamber (11). The interaction of the gas stream (69) with the remaining liquid allows the operator to tightly control the liquid film thickness on the sample by adjusting the suction flow rate and/or duration of suction. The amount of liquid remaining on the sample support (1) can be controlled by adjusting the duration and flow rate of the operation of the suction pump (21) as well as the temperature and humidity inside the humidity chamber (11).

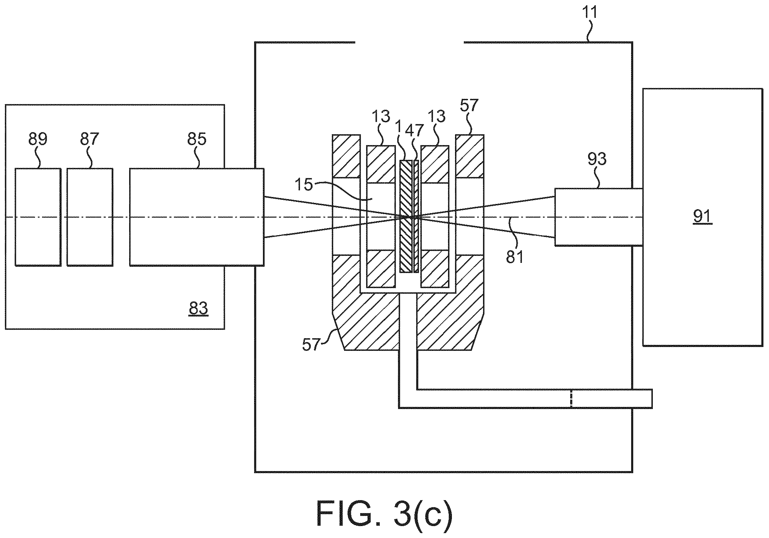

Referring now to Figure 3c, there is shown a cross section of the humidity chamber (11), with the sample treatment holder (13) in a vertical configuration, and with associated optical means (83, 91) for monitoring of the process of fluid removal from the sample support (1) prior to the plunging step. The design of the holder (13) and the suction mount (57) is such that the sample support (1) can be optically accessed from both sides. The sample axis (81) is perpendicular to the sample support (1) and coincides with the axis of symmetry of the sample support (1). The apparatus includes a microscope assembly (83) and/or a film thickness measurement system (91), which are discussed below.

The microscope assembly (83) allows the optical observation of the sample support (1). The microscope assembly (83) comprises an objective lens (85) and an eyepiece module (87) for direct viewing of the sample support (1) and/or a camera module (89) for remote observation of the sample support (1). The objective lens (85) has its optical axis aligned substantially parallel to the sample axis (81) and can be focused on the sample support (1). The microscope assembly (83) also contains illumination means and/or optical filters, which are not shown in the Figure for simplicity.

The film thickness measurement system (91) provides data on the thickness of layer of liquid on the sample and is typically based on spectroscopic reflectometry. The film thickness measurement system (91) contains a fibre-coupled sensor head (93) directed towards the sample support (1), and which contains a light source and a spectrometer. The sensor head (93) is positioned to pick up an appropriate section on the sample support (1), and is orientated on an axis substantially parallel to the sample axis (81) and is typically opposing the objective lens (85) of the microscope assembly (83). In the configuration shown in Figure 3c, the microscope assembly (83) can also be used to verify the precise location of the measurement spot of the film thickness measurement system (91). A description of a commercial film thickness measurement system can be found at http://oceanoptics.com/product/nanocalc/.

Referring now to Figure 4, there is shown an enlarged view of a treatment holder (13) which receives and holds the sample support (1) during the excess liquid removal step in the humidity chamber (11). In order to shape the flow-path of the liquid or vapour stream (69), small radially extending grooves or channels (71) are machined into the outer surface of the treatment holder (13). The inside of one half of the treatment holder (13) is shown, and the radial grooves (71) are on the surface that is in contact with the sample support (1). The position of the outer diameter (73) of the sample support grid (1), as shown in Figure 1, when clamped in the holder (13) is also shown in Figure 4 as a dashed line. The pathway of the divided water/vapour stream (69) in the vicinity of the sample support (1) is indicated by means of the diverging arrows (69). An outer circular groove (75) extends around the circumference of the holder (13), and is connected to the small radial grooves (71). The circumferential circular groove (75) is itself connected to an interface channel (79), which feeds into the suction channel (51), and to pump (55). Thus, the stream (69) feeds away from the sample disposed on the sample support (1) through aperture (15), along radial grooves (71) where it meets the circular groove (75), and then along channel (79) to pump (55). This overall arrangement of grooves and channels enables a uniform spatial distribution of the stream (69) in the vicinity of the sample support (1), for removal of the excess liquid on the sample support (1). Clearly, for different shaped sample supports (1) (e.g. square), a correspondingly shaped treatment holder (13) with radial grooves (71) and circumferential groove (75) is needed.

In a typical implementation of the invention, the suction pump as well as temperature and humidity inside the humidity chamber (11) are controlled by a computer and automated by software. The remaining amount of liquid on the sample support (1) translates directly into the thickness of the film of liquid on the support (1) and is related to the thickness of the vitrified water layer generated by the subsequent plunging process. It should be noted that the sample support (1) is orientated vertically for the process of liquid removal by means of suction. However, an alternative procedure would be to perform the suction step when the sample support (1) is in a horizontal orientation, followed by a rotation step prior to gripping with the tweezers (5) and plunging.

Following the removal of excess liquid in the humidity chamber (11), a plunge-freezing step is then carried out in an adjacent plunger bath unit (25). In order to prepare the sample support (1) for this step, the clamping of the sample support (1) between the two halves of the treatment holder (13) is released and the sample support (1) is picked up from the treatment holder (13) inside the humidity chamber (11) by the tweezers (5), and subsequently moved into a position above the plunger-bath unit (25). When in the correct position, the tweezers (5) holding the sample support (1) are very quickly lowered or "plunged" into the plunger bath unit (25), which typically contains liquid ethane or propane or a mixture thereof as the primary cryogen. The plunging motion of the tweezers (5) is either a free-fall motion or can be assisted by spring loading to increase speed.

After the plunging process, the sample support (1) continues to be held by the tweezers (5), which have the capability to be moved laterally to translate between the different positions along the track (7) as well as being raised or lowered with electromechanical actuators. In the step immediately following the plunging, the tweezers (5) with the sample support (1) are jointly raised and therefore the sample support (1) is extracted from the primary cryogen (e.g. liquid ethane or propane or a mixture thereof).

Now in the frozen-hydrated state, contamination of the sample must be avoided. Therefore, the frozen sample support (1) is safely transferred into a pre-cooled loading chamber (27) which is disposed adjacent to the plunger bath unit (25), where it is loaded into a cassette holder (29). The loading chamber (27) consists of a transfer container (33) which is contained within a cryogen bath (37) consisting of liquid nitrogen, acting as a secondary cryogen.

The cassette holder (29) is designed to hold one or more sample supports (1) by means of clamping. The cassette holder (29) consists of two magnetic halves which allows clamping of the sample support (1) between them by magnetic action. The two halves can be pushed apart to release the clamping and to allow removal or insertion of the sample support (1) into the cassette holder (29). Referring to Figure 2(a), there is shown an example for the cassette holder (29), where only one of the two halves is visible and the second half is disposed behind the first. The cassette holder (29) accepts up to three sample supports (1), and has three corresponding cassette holder apertures (31) to allow side access to the sample for the purpose of screening and imaging.

The cassette holder (29) is placed, by the tweezers (5), inside the transfer container (33) installed in contact with the cryogen bath (37) containing liquid nitrogen. A container lid (35) mounted on the transfer container (33) can be opened/closed as needed and gives additional protection to the samples from contamination. After opening the container lid (35), the sample support (1) is loaded into the pre-cooled cassette holder (29) under a cold and dry nitrogen gas atmosphere and the container lid (35) is closed. The cassette holder (29) is made from metal in order to have sufficient heat capacity and to transfer cooling applied to its outside from the liquid nitrogen in the cryogen bath (37) to the cassette holder (29).

The closed transfer container (33) is then manually removed from the transfer section (27) and can be stored and transported in a liquid nitrogen bath to another instrument as illustrated in Figure 2(b). At its destination, the cassette holder (29) can be removed again from the transfer container (33) and transferred into other instruments/techniques including but not limited to Cryo-Fluorescence Microscopy (39), Cryo-Electron-Microscopy (41), Cryo-X-ray microscopy / tomography (43) or a Focussed Ion Beam (45).

### Summary

In summary, the inventors have developed a novel method and a corresponding apparatus (100) for the preparation of microscopic samples, which have relevance in the field of cryo electron microscopy and cryo light microscopy. A method for plunge-freezing including pre-treatment steps and an automated apparatus (100) are described which make it possible to obtain plunge-frozen vitrified samples with consistent, repeatable quality and minimised sample contamination. To achieve this, a novel process for removing the excess liquid by means of sucking, as well as an automated handling procedure are described. The disclosed process for the removal of excess liquid replaces the established process of blotting with filter paper prior to plunging and avoids its common practical problems.

## Claims

1. An apparatus (100) for removing fluid from a microscopic sample (23), the apparatus (100) comprising:-
- a humidity chamber (11) configured to control the humidity therein;
- a sample clamp disposed within the humidity chamber and configured to clamp a sample support (1), which is loaded, or adapted to be loaded, with a microscopic sample (23); and
- suction means (55) configured to create suction at least adjacent to the sample (23) to thereby remove fluid therefrom;
**characterised in that** the humidity chamber (11) comprises a humidity sensor configured to detect and monitor the humidity of the environment surrounding the sample (23) disposed on the sample support (1).

2. An apparatus (100) according to claim 1, wherein the apparatus (100) comprises sample handling means (8) configured to hold and move the sample support (1) between different sections of the apparatus (100), optionally wherein the sample handling means (8) comprises gripping means (5) configured to grip and/or release the sample support (1) in different sections of the apparatus (100), optionally wherein the sample handling means (5) comprises a track (7) along which the gripping means (5) is moveable along a substantially horizontal axis.

3. An apparatus (100) according to claim 2, wherein the sample handling means (8) comprises sample delivery means (19) configured to deliver the sample (23) to the sample support (1).

4. An apparatus (100) according to any preceding claim, wherein the apparatus (100) comprises a chamber (9) configured to render a section of the sample support (1) substantially hydrophilic or hydrophobic, optionally wherein the chamber (9) comprises a glow discharge chamber configured to apply a vacuum and carry out plasma treatment on the sample support (1).

5. An apparatus (100) according to any preceding claim, wherein the apparatus (100) comprises a fluid channel (51) in fluid connection between the sample clamp and the suction means (55), and along which fluid removed from the sample can flow, optionally wherein the fluid channel (51) comprises a filter (53) disposed therein, which filter (53) is configured to remove hazardous or infectious biological material from the fluid that is removed from the sample (23).

6. An apparatus (100) according to any preceding claim, wherein the suction means (55) comprises a suction pump configured to create a suction force at least adjacent to the sample (23).

7. An apparatus (100) according to any preceding claim, wherein the sample clamp further comprises a treatment holder (13) configured to accommodate the sample support (1) during fluid removal, optionally wherein the treatment holder (13) comprises two halves which sandwich the sample support (1) therebetween, optionally wherein the treatment holder (13) comprises at least one or a plurality of spaced apart, radially extending grooves or channels (71) along which fluid removed from the sample (23) can flow.

8. An apparatus (100) according to any preceding claim, wherein the apparatus (100) comprises optical means (83, 91) configured to monitor fluid removal from the sample (23), optionally wherein the optical means (83, 91) comprises a microscope assembly (83), which is installed or can be brought into position to focus on the sample (23).

9. An apparatus (100) according to any preceding claim, wherein the apparatus (100) comprises a film thickness measurement system (91) configured to measure the film thickness of the liquid film on the sample support (1).

10. An apparatus (100) according to any preceding claim, wherein the apparatus (100) comprises a cryogen bath (25) containing a primary cryogen by which the treated sample is cryo-frozen, wherein the cryogen is liquid ethane or propane, or a mixture thereof.

11. An apparatus (100) according to any preceding claim, wherein the apparatus (100) comprises a loading chamber (27) in which cryo-frozen sample is loaded into a sample cassette holder (29), and by which an operator may view or analyse the sample (23), optionally wherein the loading chamber (27) comprises a transfer container (33) partially or fully immersed in a secondary cryogen, for example liquid nitrogen.

12. A method for removing fluid from a microscopic sample, the method comprising:-
- clamping a sample support (1) loaded with a microscopic sample (23) in a humidity chamber (11);
- controlling the humidity in the humidity chamber (11);
- creating suction at least adjacent to the sample (23) to thereby remove fluid therefrom; and **characterised in**
- detecting and monitoring the humidity of the environment surrounding the sample (23) disposed on the sample support (1).

13. A method according to claim 12, wherein the method comprises gripping and/or releasing the sample support (1) with gripping means (5), optionally wherein the method comprises raising and/or lowering the gripping means (5) along a substantially vertical axis (102), optionally wherein the method comprises picking up the sample support (1) by the gripping means (5), and then moving it between the different sections of the apparatus (100), where the sample support (1) is released and/or processed.

14. A method according to either claim 12 or claim 13, wherein the method comprises creating a negative pressure differential at or around the sample (23), optionally wherein the method comprises producing a fluid stream on or in the vicinity of the sample, in which the stream is initially composed of liquid from the sample (23), and then subsequently the stream is composed of the gas atmosphere from the humidity chamber (11).

15. A method according to any one of claims 12-14, wherein the method comprises cryo-freezing the sample in a cryogen bath (25) containing a primary cryogen, which is liquid ethane or propane, or a mixture thereof.

## Patentansprüche

1. Eine Vorrichtung (100) zur Entfernung von Flüssigkeit oder Gas von einer mikroskopischen Probe (23), mit der Vorrichtung (100) umfassend:-
- eine Feuchtigkeitskammer (11) konfiguriert für die Regelung der Feuchtigkeit darin;
- eine Probenklemmvorrichtung befindlich innerhalb der Feuchtigkeitskammer und zur Klemmungeines Probenträgers (1) konfiguriert, welcher mit einer Probe (23) beladen ist oder für die Beladung mit der Probe (23) adaptiert werden kann; und
- eine Saugvorrichtung (55) konfiguriert für die Generierung von Saugkraft mindestens in der Nähe der Probe (23) um Flüssigkeit und / oder Gas hiervon zu entfernen;
**dadurch gekennzeichnet dass**,
die Feuchtigkeitskammer (11) einen Feuchtigkeitssensor beinhaltet, welcher zur Detektion und zur Überwachung der Feuchtigkeit in der Umgebung um die Probe (23) konfiguriert ist, welche auf dem Probenträger (1) angebracht ist.

2. Eine Vorrichtung (100) nach Anspruch 1, wobei der Vorrichtung (100) Mittel zur Probenmanipulation (8) beinhaltet, welche zum Halten und Bewegen des Probenträgers (1) zwischen den verschiedenen Abschnitten der Vorrichtung (100) konfiguriert sind, wobei optional die Mitteln zur Probenmanipulation (8) mit einer Greifvorrichtung (5) zum Greifen und/oder Freigeben des Probenträger (1) innerhalb der verschiedenen Abschnitte der Vorrichtung (100) ausgestattet sind, wobei optional die Mittel zur Probenmanipulation eine Schiene (7) beinhalten, entlang welcher die Greifvorrichtung (5) entlang einer im Wesentlichen horizontalen Achse bewegt werden kann.

3. Eine Vorrichtung (100) nach Anspruch 2,
**dadurch gekennzeichnet dass**
die Mittel zur Probenmanipulation (8) eine Probenzuführungsvorrichtung (19) zur Zuführung der Probe (23) auf den Probenträger (1) beinhalten.

4. Eine Vorrichtung (100) entsprechend eines der voranstehenden Ansprüche,
**dadurch gekennzeichnet dass**
die Vorrichtung (100) eine Kammer (9) beinhaltet, welche dafür vorgesehen ist einen Teil des Probenhalters im Wesentlichen hydrophil oder hydrophob zu machen, wobei die Kammer (9) optional eine Glimmentladungskammer umfasst, welche vorgesehen ist ein Vakuum anzulegen und Plasmabehandlung des Probenträgers (1) durchzuführen.

5. Eine Vorrichtung (100) entsprechend eines der voranstehenden Ansprüche,
**dadurch gekennzeichnet dass**
die Vorrichtung (100) einen Kanal (51) als Verbindung für Flüssigkeit und / oder Gas als zwischen der Probenklammer und der Saugvorrichtung (55) beinhaltet und die von der Probe entfernte Flüssigkeit und / oder Gas diesen Kanal entlang fliessen kann, wobei der Kanal (51) optional einen darin installierten Filter (53) umfasst, wobei der Filter (53) dafür ausgelegt ist, das von der Probe (23) entfernte gefährliche oder biologisch - infizierende Material aus der Flüssigkeit und / oder dem Gas zu entfernen.

6. Eine Vorrichtung (100) entsprechend eines der voranstehenden Ansprüche,
**dadurch gekennzeichnet dass**
die Saugvorrichtung (55) eine Saugpumpe beinhaltet welche dafuer ausgelegt is zumindest in der Nähe der Probe (23) eine Saugkraft zu erzeugen.

7. Eine Vorrichtung (100) entsprechend eines der voranstehenden Ansprüche,
**dadurch gekennzeichnet dass**
die Probenklammer weiterhin einen Behandlungshalter (13) beinhaltet, welcher dafür ausgelegt ist den Probenträger (1) wärend der Entfernung von Flüssigkeit und / oder Gas aufzunehmen, wobei der Behandlungshalter (13) optional aus zwei Hälften besteht zwischen welchen der Probenträger (1) eingeschlossen ist, wobei der Behandlungshalter optional mindestens eine oder eine Mehrzahl voneinander entfernter, sich radial ausbreitenden Vertiefungen oder Kanäle (71) aufweist, entlang derer die Flüssigkeit und / oder das von der Probe (23) enfernte Gas fliessen können.

8. Eine Vorrichtung (100) entsprechend eines der voranstehenden Ansprüche,
**dadurch gekennzeichnet dass**
die Vorrichtung (100) optische Mittel (83, 91) enthält, welche dazu ausgelegt sind die Entfernung von Flüssigkeit und / oder Gases von der Probe (23) zu überwachen, wobei die optischen Mittel (83, 91) optional eine Mikroskopbaugruppe (83) umfassen, welche installiert is oder in Position gebracht werden kann sodass sie auf die Probe (23) fokussiert.

9. Eine Vorrichtung (100) entsprechend eines der voranstehenden Ansprüche,
**dadurch gekennzeichnet dass**
die Vorrichtung (100) eine Schichtdicken-Messsystem (91) umfasst, welches dafür ausgelegt ist die Dicke des Flüssigkeitsfilms auf dem Probenträger (1) zu messen.

10. Eine Vorrichtung (100) entsprechend eines der voranstehenden Ansprüche,
**dadurch gekennzeichnet dass**
die Vorrichtung (100) ein Kryogen-bad (25) umfasst, welches ein primäres Kryogen enthält, durch welches die behandelte Probe cryo-gefroren wird, wobei das Kryogen flüssiges Ethan oder Propan oder eine Mischung daraus ist.

11. Eine Vorrichtung (100) entsprechend eines der voranstehenden Ansprüche,
**dadurch gekennzeichnet dass**
die Vorrichtung (100) eine Ladekammer (27) enthält, in welcher die cryo-gefrorene Probe in einen Proben-Kassettenhalter (29) geladen wird, mittels welcher ein Nutzer die Probe (23) betrachten oder analysieren kann, wobei die Ladekammer (27) optional einen Transfercontainer (33) beinhaltet, welcher teilweise oder vollständig in einem sekundären Kryogen, zum Beispiel flüssigen Stickstoff, eingetaucht ist.

12. Eine Methode zur Entfernung von Flüssigkeit und / oder Gas von einer mikroskopischen Probe, die Methode beinhaltend:-
- Klemmung eines Probenhalters (1) beladen mit einer mikroskopischen Probe (23) in einer Feuchtigkeitskammer (11);
- Regelung der Feuchtigkeit in der Feuchtigkeitskammer (11);
- Erzeugung einer Saugkraft zumindest in der Nähe zur Probe (23) um damit Flüssigkeit und /oder Gas hiervon zu entfernen; und **dadurch gekennzeichnet**
- Detektierung und Überwachung der Feuchtigkeit in der die Probenumgebung der Probe (23), welche sich auf dem Probenträger (1) befindet.

13. Eine Methode nach Anspruch 12
**dadurch gekennzeichnet dass**
die Methode das Greifen und / oder Freigeben des Probenträgers (1) durch die Greifvorrichtung (5) umfasst, wobei die Methode optional das Heben und / oder Senken der Greifvorrichtung (5) entlang einer im wesentlichen horizontalen Achse (102) umfasst, wobei die Methode optional das Aufnehmen des Probenträgers (1) duch die Greifmittel (5) und dann die Bewegung des Probenträgers (1) zwischen den verschiedenen Abschnitten der Vorrichtung beinhaltet, wobei der Probenträger (1) freigegeben und / oder bearbeitet wird.

14. Eine Methode nach Anspruch 12 oder Anspruch 13,
**dadurch gekennzeichnet dass**
die Methode das Generieren einer Negativen Druckdifferenz an oder um die Probe (23) beinhaltet, wobei optional die Methode das Generieren eines Stroms von Flüssigkeit und / oder Gas auf oder in der Nähe der Probe umfasst, in welchem der Strom anfänglich aus Flüssigkeit von der Probe (23) und darauffolgend aus Gasatmosphäre aus der Feuchtigkeitskammer (11) zusammengesetzt ist.

15. Eine Methode nach einem beliebigen der Ansprüche 12-14,
**dadurch gekennzeichnet dass**
die Methode das cryo-gefrieren der der Proben in einem Kryogen-Bad (25) umfasst, welches ein primäres Kryogen enthält, welches Ethan, Propan oder eine Mischung daraus ist.

## Revendications

1. Appareil (100) permettant de retirer un fluide d'un échantillon microscopique (23), l'appareil (100) comprenant :
- une chambre humide (11) conçue pour contrôler l'humidité à l'intérieur de celui-ci ;
- une pince à échantillon disposée à l'intérieur de la chambre humide et conçue pour serrer un support d'échantillon (1), qui est chargé, ou adapté pour être chargé, avec un échantillon microscopique (23) ; et
- un moyen d'aspiration (55) conçu pour créer une aspiration au moins adjacente à l'échantillon (23) pour ainsi en retirer le fluide ;
**caractérisé en ce que** la chambre humide (11) comprend un capteur d'humidité conçu pour détecter et surveiller l'humidité de l'environnement entourant l'échantillon (23) disposé sur le support d'échantillon (1).

2. Appareil (100) selon la revendication 1, ledit appareil (100) comprenant un moyen de manipulation d'échantillon (8) conçu pour maintenir et déplacer le support d'échantillon (1) entre différentes sections de l'appareil (100), éventuellement ledit moyen de manipulation d'échantillon (8) comprenant un moyen de préhension (5) conçu pour saisir et/ou relâcher le support d'échantillon (1) dans différentes sections de l'appareil (100), éventuellement ledit moyen de manipulation d'échantillon (5) comprenant une piste (7) le long de laquelle le moyen de préhension (5) peut se déplacer le long d'un axe sensiblement horizontal.

3. Appareil (100) selon la revendication 2, ledit moyen de manipulation d'échantillon (8) comprenant un moyen de distribution d'échantillon (19) conçu pour délivrer l'échantillon (23) au support d'échantillon (1).

4. Appareil (100) selon l'une quelconque des revendications précédentes, ledit appareil (100) comprenant une chambre (9) conçue pour rendre une section du support d'échantillon (1) sensiblement hydrophile ou hydrophobe, éventuellement ladite chambre (9) comprenant une chambre à décharge luminescente conçue pour appliquer un vide et effectuer un traitement au plasma sur le support d'échantillon (1).

5. Appareil (100) selon l'une quelconque des revendications précédentes, ledit appareil (100) comprenant un canal de fluide (51) en communication fluidique entre la pince à échantillon et le moyen d'aspiration (55), et le long duquel le fluide retiré de l'échantillon peut s'écouler, éventuellement ledit canal de fluide (51) comprenant un filtre (53) disposé en son sein, lequel filtre (53) est conçu pour éliminer le matériau biologique dangereux ou infectieux du fluide qui est retiré de l'échantillon (23).

6. Appareil (100) selon l'une quelconque des revendications précédentes, ledit moyen d'aspiration (55) comprenant une pompe d'aspiration conçue pour créer une force d'aspiration au moins adjacente à l'échantillon (23).

7. Appareil (100) selon l'une quelconque des revendications précédentes, ladite pince à échantillon comprenant en outre un support de traitement (13) conçu pour recevoir le support d'échantillon (1) pendant le retrait du fluide, éventuellement ledit support de traitement (13) comprenant deux moitiés qui prennent en sandwich le support d'échantillon (1) entre eux, éventuellement ledit support de traitement (13) comprenant au moins une rainure ou un canal ou une pluralité de rainures ou canaux (71) s'étendant radialement espacés le long desquels le fluide retiré de l'échantillon (23) peut s'écouler.

8. Appareil (100) selon l'une quelconque des revendications précédentes, ledit appareil (100) comprenant des moyens optiques (83, 91) conçus pour surveiller le retrait de fluide de l'échantillon (23), éventuellement lesdits moyens optiques (83, 91) comprenant un ensemble microscope (83), qui est installé ou peut être mis en position pour se focaliser sur l'échantillon (23).

9. Appareil (100) selon l'une quelconque des revendications précédentes, ledit appareil (100) comprenant un système de mesure d'épaisseur de film (91) conçu pour mesurer l'épaisseur de film du film liquide sur le support d'échantillon (1).

10. Appareil (100) selon l'une quelconque des revendications précédentes, ledit appareil (100) comprenant un bain de cryogène (25) contenant un cryogène primaire au moyen duquel l'échantillon traité est cryo-congelé, ledit cryogène étant de l'éthane ou du propane liquide, ou un mélange de ceux-ci.

11. Appareil (100) selon l'une quelconque des revendications précédentes, ledit appareil (100) comprenant une chambre de chargement (27) dans laquelle l'échantillon cryo-congelé est chargé dans un support de cassette d'échantillons (29), et par laquelle un opérateur peut visualiser ou analyser l'échantillon (23), éventuellement ladite chambre de chargement (27) comprenant un récipient de transfert (33) partiellement ou totalement immergé dans un cryogène secondaire, par exemple de l'azote liquide.

12. Procédé permettant de retirer un fluide d'un échantillon microscopique, le procédé comprenant :
- le serrage d'un support d'échantillon (1) chargé avec un échantillon microscopique (23) dans une chambre humide (11) ;
- le contrôle de l'humidité dans la chambre humide (11) ;
- la création d'une aspiration au moins adjacente à l'échantillon (23) pour retirer ainsi le fluide de celui-ci ;
et **caractérisé par**
- la détection et la surveillance de l'humidité de l'environnement entourant l'échantillon (23) disposé sur le support d'échantillon (1).

13. Procédé selon la revendication 12, ledit procédé comprenant la saisie et/ou le relâchement du support d'échantillon (1) avec un moyen de préhension (5), éventuellement ledit procédé comprenant le soulèvement et/ou l'abaissement du moyen de préhension (5) le long d'un axe sensiblement vertical (102), éventuellement ledit procédé comprenant la saisie du support d'échantillon (1) par le moyen de préhension (5), puis son déplacement entre les différentes sections de l'appareil (100), où le support d'échantillon (1) est relâché et/ou traité.

14. Procédé selon la revendication 12 ou la revendication 13, ledit procédé comprenant la création d'une pression différentielle négative au niveau ou autour de l'échantillon (23), éventuellement ledit procédé comprenant la production d'un flux de fluide sur ou à proximité de l'échantillon, dans lequel le flux se compose initialement de liquide provenant de l'échantillon (23), puis par la suite le flux se compose de l'atmosphère gazeuse de la chambre humide (11).

15. Procédé selon l'une quelconque des revendications 12 à 14, ledit procédé comprenant la cryo-congélation de l'échantillon dans un bain de cryogène (25) contenant un cryogène primaire, qui est de l'éthane ou du propane liquide, ou un mélange de ceux-ci.
